# EUROPEAN PATENT SPECIFICATION

(11) **EP 2 821 123 B1**
(45) Date of publication and mention of the grant of the patent: **08.08.2018**
(21) Application number: 13754538.0
(22) Date of filing: 25.02.2013
(51) Int. Cl.: B01D 63/12, B01D 63/00

(54) **SEPARATION MEMBRANE MODULE AND REPLACEMENT METHOD FOR SEPARATION MEMBRANE ELEMENT**
TRENNMEMBRANENMODUL UND AUSTAUSCHVERFAHREN FÜR EIN TRENNMEMBRANENELEMENT
MODULE MEMBRANE DE SÉPARATION ET PROCÉDÉ DE REMPLACEMENT D'UN ÉLÉMENT DE MEMBRANE DE SÉPARATION

(30) Priority: 29.02.2012 JP 2012042969
(43) Date of publication of application: 07.01.2015
(73) Proprietor: Toray Industries, Inc., Tokyo 103-8666 (JP)
(72) Inventor: TANIGUCHI, Masahide, Otsu-shi, Shiga 520-8558 (JP); MAEDA, Tomohiro, Otsu-shi, Shiga 520-8558 (JP)
(74) Representative: Hoefer & Partner Patentanwälte mbB
(86) International application number: PCT/JP2013/054675
(87) International publication number: WO 2013/129283

(56) References cited:
- WO-A1-2011/046944
- WO-A1-2012/046388
- JP-A- 2000 288 356
- JP-A- 2001 300 271
- JP-A- 2007 523 744
- JP-A- 2008 207 049
- JP-A- 2009 154 159
- JP-A- 2009 220 104
- JP-A- 2009 291 745
- JP-A- 2011 152 538
- US-A1- 2011 174 713
- US-A1- 2011 290 711

## Description

### TECHNICAL FIELD

The present invention relates to a separation membrane module loaded with a plurality of spiral-type separation membrane elements for separation and removal of ingredients present in a fluid to be treated.

### BACKGROUND ART

In recent years, fluid separation techniques using various types of separation membranes, such as gas separation membranes, reverse osmosis membranes, nanofiltration membranes, ultrafiltration membranes and microfiltration membranes, have received attention in their capacity as a high-precision energy-saving treatment process, and applications thereof have been proceeding in treatments of a wide variety of fluids. For example, in a reverse osmosis separation method using a reverse osmosis membrane, it is possible to obtain a liquid reduced in concentration of dissolved matters such as salts by forcing a solution containing dissolved matters such as salts to permeate through a reverse osmosis membrane under a pressure higher than an osmosis pressure of the solution, and such a method has been widely used for desalination of seawater, brackish water or the like, production of ultra-pure water, concentrated recovery of valuables, and so on.

Those separation membranes can have various shapes, such as a flat shape, a tubular shape and a hollow-fiber shape. In the case of a flat membrane, the separation membrane is often used in the form of a spiral-type separation membrane element. As to the structure of a conventional spiral-type separation membrane element, there has been known such a structure that, as shown e.g. in Patent Document 1 and Fig. 1, one or more than one laminate of a separation membrane 1, a feed-side spacer 3 and a permeate-side spacer 2 is wound up around a porous center pipe 4 and an anti-telescoping plate 5 is mounted at both ends of the center pipe.

In this separation membrane element, while a fluid 6 (raw water) to be treated is being fed from one end and is flowing along the feed-side spacer 3, some of ingredients (e.g. water in the case of desalinating seawater) is made to permeate through the separation membrane 1, thereby being separated from the fluid. Thereafter, the ingredient having permeated through the separation membrane (a permeated fluid 7a (permeate)) moves along the permeate-side spacer 2, flows into the center pipe 4 via pores in its periphery, moves through the interior of the center pipe 4, and is taken out as the permeated fluid 7 (permeate) from another end of the separation membrane element. On the other hand, the treated fluid containing non-permeated components (salts in the case of desalinating seawater) in high concentrations is taken out as a concentrated fluid 8 (concentrate) from the other end of the separation membrane element.

In the conventional separation membrane element, a seal made of an elastic material is usually fitted into an orbiting groove cut on the periphery side of the anti-telescoping plate placed on the raw-water side. And the separation membrane element is used in a state that a plurality of separation membrane elements are loaded into a vessel, more specifically a pressure vessel. With the elastic seal being fitted into an orbiting groove cut on the periphery side of the anti-telescoping plate, a gap between the separation membrane element and the pressure vessel can be sealed with the seal made of an elastic material, whereby the fluid to be treated is inhibited from flowing through the gap to result in high-efficiency treatment of the fluid to be treated through the use of separation membrane elements. Up to now, seals made of elastic resins, such as O-ring seals having an O-shape profile and U-cup ring seals having a U-shape profile, have been used. In the case of using an O-ring seal, the O-ring seal fitted into the orbiting groove cut on the periphery side of an anti-telescoping plate is crushed and deformed through the contact with the inner wall of the pressure vessel, thereby filling up the gap between a separation membrane element and the inside of a pressure vessel.

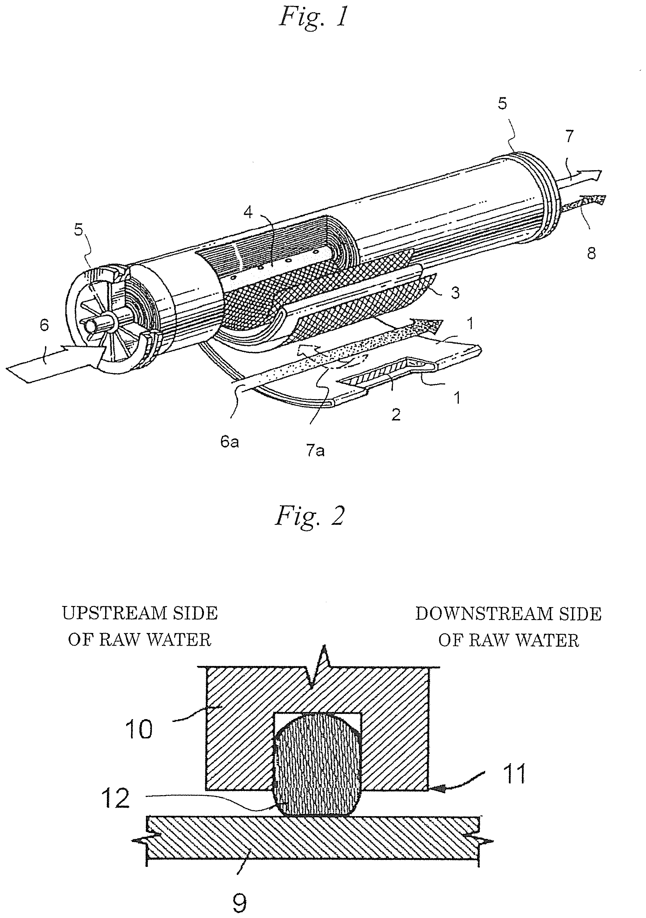

Fig. 2 is a diagram showing a state that a separation membrane element with an O-ring seal 12 fitted into the periphery 10 of an anti-telescoping plate 5 is loaded in the interior of a pressure vessel, and the diagram is a partially-enlarged cross-sectional view made by enlarging the vicinity of an O-ring seal fitted region and illustrating it schematically. In Fig. 2, the O-ring seal 12 is deformed at the portion in pressurized contact with the inner wall 9 of the pressure vessel, thereby increasing an area of contact with the inner wall 9 of the pressure vessel. Further, since the O-ring seal 12 is made of an elastic resin, there arises a high sliding friction between the O-ring seal 12 and the inner wall 9 of the pressure vessel.

Therefore, moving a separation membrane element in the interior of the pressure vessel requires a great load to resist a friction between the O-ring seal 12 and the inner wall 9 of the pressure vessel, and when a plurality of separation membrane elements in particular are moved in the interior of the pressure vessel, the required load becomes vastly great and moving them in the interior of the pressure vessel entails much labor. In fact, mounting and demounting operations of such separation membrane elements inside the pressure vessel become inefficient.

With the intention of solving those problems concerning the O-ring seal, a U-cup ring seal or a V-cup ring seal was devised as a seal member of a separation membrane element, and has been widely used. The U-cup ring seal is made using an elastic resin, and set in an anti-telescoping plate on a separation membrane element so that the opened portion of the U shape faces towards the raw water side. Such a U-cup seal has a structure that, when water is fed from the raw water side, the U-cup is opened by the fed-water pressure to result in filling a gap between the U-cup seal and the pressure vessel. Similar explanations are given to the V-cup ring seal also.

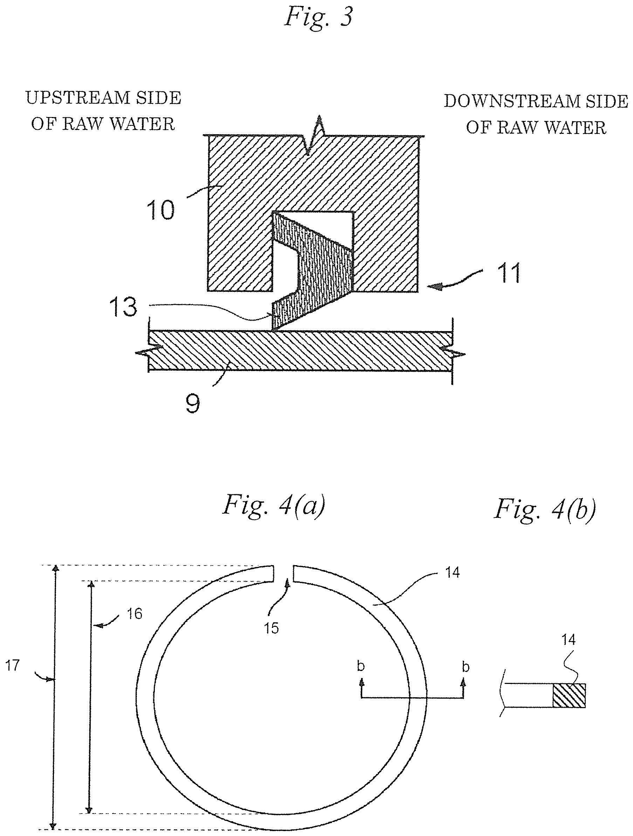

Fig. 3 is a diagram showing a state that a separation membrane element with a U-cup seal 13 fitted into the periphery 10 of an anti-telescoping plate is loaded in the interior of a pressure vessel, and the diagram is a partially-enlarged cross-sectional view made by enlarging the vicinity of a U-cup seal fitted region and illustrating it schematically. As shown in Fig. 3, the U-cup seal 13, though relatively small in area of contact with the inner wall 9 of the pressure vessel, can perform a function of sealing against a fluid flowing from the upstream side to downstream side of raw water (in a direction from the left to the right in Fig. 3). The U-cup seal, however, tends to become insufficient to function as a seal against a fluid flowing in a direction from the right to the left in Fig. 3. More specifically, when the separation membrane element is made to move from the upstream side to downstream side of raw water in the interior of the pressure vessel, an end of the U-cup seal is brought into a light contact with the inner wall of the pressure vessel, and the separation membrane element can be easily moved in the interior of the pressure vessel, but on the other hand, when the separation membrane element is made to move from the downstream side to upstream side of raw water in the interior of the pressure vessel, an end of the U-cup seal is brought into heavy contact with the inner wall of the pressure vessel, further comes to warp, and finally the U-cup seal gets caught in a gap between the separation membrane element and the pressure vessel. Thus not only a very heavy load is required for moving the separation membrane element in the interior of the pressure vessel but also the U-cup seal sustains damage and comes to lose its sealing function. Therefore, the U-cup ring seal has a characteristic that movement from the downstream side to upstream side of raw water in the interior of the pressure vessel is practically impossible in contrast to the O-ring seal. Such being the case, when the U-cup seal is employed, mounting and demounting operations of separation membrane elements in the interior of the pressure vessel are carried out adopting a method that each separation membrane element is introduced into the pressure vessel from the upstream side of raw water and pushed to the downstream side of raw water, and the separation membrane element on the downstream side of raw water is pulled out, or drawn out from the downstream (concentrate) side of raw water.

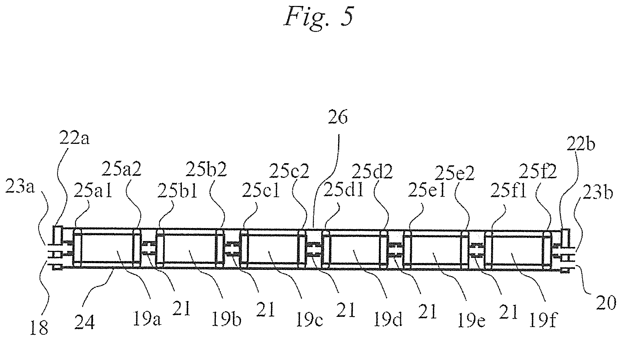

In using separation membrane elements, though there is a case where one separation membrane element alone is loaded into a pressure vessel, a plurality of separation membrane elements are generally loaded into a pressure vessel in a state that they are connected up to one another as shown in Fig. 5. In cases where a plurality of separation membrane elements are loaded in series in a pressure vessel, contaminants in raw water adhere to and deposit on membrane surfaces inside the separation membrane elements situated on the upstream side of raw water, whereby degradation in functionality of those separation membrane elements are generally caused to result in reductions of the total amount and quality of produced water. And degrees of such adhesion and deposition of contaminants are especially high in a raw-water's upstream side portion of the membrane surface inside the separation membrane element situated nearest the raw-water's upstream end. In addition, while permeating through each separation membrane in sequence, raw water is being concentrated, and as a result thereof, there occur cases where, at the site situated nearest the raw-water's downstream end, dissolved matter whose concentration has become higher than its solubility precipitates as scales, and these scales deposit on the membrane surface and raw water channels get clogged with these scales. Needless to say, operations are generally carried out within the limits of concentration so as not to bring about a state that the concentration of dissolved matter becomes higher than dissolved matter solubility, but when the concentration and temperature of raw water fluctuate against assumptions, deposition of scales may occur. In any case, it is possible to recover the functionality to some extent by carrying out various cleaning operations while leaving separation membrane elements as they are loaded, but eventually the most-soiled separation membrane element, which is situated nearest the raw-water's upstream end, and the scale-deposited separation membrane element, which is situated nearest the raw-water's downstream end, are removed and replaced with new separation membrane elements, whereby the total amount and quality of produced water come to be improved. In the case of fitting U-cup seals into separation membrane elements inside the pressure vessel as shown in Fig. 3 and moving the separation membrane elements in the interior of the pressure vessel, the movement is always required to be made in a direction from the raw-water's upstream side to the raw-water's downstream (concentrate) side, and removal of the separation membrane element situated nearest the raw-water's upstream end requires other downstream-side separation membrane elements inside the pressure vessel to be temporarily taken out from the raw-water's downstream side. Such a removal operation therefore involves enormous time and labor. In the subsequent reloading operation, the separation membrane element situated nearest the raw-water's upstream end and taken out last or some separation membrane elements situated on the raw-water's upstream side are replaced with new separation membrane elements, and the new separation membrane elements are loaded in afresh into the pressure vessel from the raw-water's upstream side. At this time, though the order of loading is determined as appropriate by the conditions of separation membrane elements not replaced with new ones, one of the new separation membrane elements is generally loaded at the site nearest the raw-water's downstream (concentrate) end. By doing so, in the next replacement, the old separation membrane element disposed at the front is replaced with new one, and the using time of each separation membrane element is made uniform and an improvement in effectiveness is obtained. Such a replacement operation, however, involves a good deal of labor as in the case of taking out separation membrane elements. In the case of taking out a separation membrane element nearest the downstream end, it is possible to take out the separation membrane element by itself, but loading of a new separation membrane element at that site requires to be done from the raw-water's upstream side. After all, this case also requires other separation membrane elements to be temporarily taken out, and involves much labor as in the case of taking out the separation membrane elements.

For the purpose of solving those problems, Patent Document 2 has put forth a proposal that, in order to reduce a resistance to movement of a separation membrane element in the interior of a vessel and allow loading of a separation membrane element irrespective of direction in the loading, an O-ring seal or a seal having a nearly X-shape profile is used as a seal for the separation membrane element and a frictional resistance producing area is reduced by increasing the inside diameter of a pressure vessel in portions other than the portion brought into contact with the O-ring seal member at the completion of the loading of the separation membrane element. This technique is, however, applicable to only a case where one separation membrane element is loaded into a vessel. In the other case of applying the foregoing vessel system structure (such a system structure that the inside diameter of a pressure vessel is increased in portions other than the portion brought into contact with the O-ring seal member at the completion of the loading) to a system for loading a plurality of separation membrane elements into a pressure vessel, a plurality of asperities are present on the inside surface of the pressure vessel, and neighboring separation membrane elements become misaligned during loading and pulling-out operations. In addition, at the occasion of loading a plurality of separation membrane elements into a pressure vessel, there is a necessity to connect the elements to each other through the insertion of a connector having a seal like an O-ring seal into a permeate pipe section in each separation membrane element, and when each separation membrane element is made to move in the interior of the pressure vessel, the permeate pipe in an adjacent separation membrane element tends to be out of position due to the presence of asperities inside the pressure vessel. When the permeate pipe is out of position, there occurs such a problem that insertion of a connector becomes difficult. Thus the proposal is unfit for loading of a plurality of separation membrane elements.

Further, Patent Document 3 has proposed a seal 14 in split-ring shape (hereinafter referred to as "split ring seal") shown in Fig. 4 as a means to overcome drawbacks of an O-ring seal and a U-cup seal. The split ring seal has a shape that a ring seal is cut and split in one or more than one place, and is made of an inelastic resin or an inelastic material such as metal. As to the length of the periphery (perimeter) of a split ring seal, the split ring seal is designed to have a structure that the outer diameter 17 of a ring formed by joining the split part 15 of the split ring seal is slightly greater than the diameter of the inner wall of a pressure vessel and, when the split ring seal is actually fitted into an anti-telescoping plate of a separation membrane element and the resulting separation membrane element is loaded into a pressure vessel, the gap in the split part 15 is shrunk to result in bringing the split ring seal into close contact with the inner wall of the pressure vessel. By having such a structure, the problems of the previous techniques are solved and, in the case of loading spiral-type separation membrane elements into a cylindrical pressure vessel and pulling out the separation membrane elements from the pressure vessel, it becomes possible to easily move the separation membrane elements in the interior of the pressure vessel. According to the invention disclosed in Patent Document 3, in partial replacement operations of separation membrane elements, notably in a case where the separation membrane element nearest the raw-water's side in the pressure vessel is taken out and replenishment of a new separation membrane element is done at the place nearest the concentrate side, it becomes possible to push a new separation membrane element into a pressure vessel from the raw-water's downstream (concentrate) side and pull out a specified separation membrane element from the raw-water's upstream side, and pulling-out and replenishing operations of separation membrane elements can be performed with very high efficiency.
Patent Document 4 teaches a filtration device having a tubular pressure vessel and a tubular filter assembly. The tubular filter assembly is housed within the tubular pressure vessel and includes a filter element and a split ring seal circumscribing the filter element. The split ring seal has an annular body that includes a first end, a second end opposite the first end and slidably engaged with the first end, and an opening extending through the annular body.
Patent Document 5 discloses how to prevent the damage of a fluid separation element when a plurality of fluid separation elements is loaded in series within a pressure container and operated. The fluid separation element has a structure wherein a telescope-preventing plate is disposed at the end part of a spiral wound body composed by spirally winding a separation membrane, a raw water passage material and a permeated water passage material. A plurality of fluid separation elements is loaded in series within the pressure container and used. The fluid separation element is characterized in that a groove is provided on the surface of the end part of the telescope-preventing plate as a passage for communication between the raw water passage within the fluid separation element and the gap between the fluid separation element and the pressure container and that when multiple fluid separation elements are loaded in series within a pressure container, the fluid separation elements are connected so that the telescope-preventing plates of adjacent fluid separation elements come into contact with each other and a thrust ring lacking any inside-and-outside communication passage on the side is loaded downstream of the fluid separation element on the most downstream side.
Patent Document 6 teaches a radial seal for use in a filtration system having annular elements. The rings or annuli fit in a groove in an outer surface of a seal plate. Each annulus has an outer diameter larger than the inner diameter of a cylindrical housing of the filtration system. A gap in the annulus has a width selected to enable the annular element to deform sufficiently to permit insertion of the at least one annulus into the cylindrical housing. Two or more annuli can be configured such that the gaps of the annuli are misaligned when both annuli are installed in the groove, thereby minimizing leakage in operation. A registration system includes a registration element that cooperates with a registration element of the other annulus to ensure misalignment of the gaps of the pair of annuli.

### BACKGROUND ART DOCUMENT

### PATENT DOCUMENT

Patent Document 1: JP-A-10-137558
Patent Document 2: JP-A-2008-207049
Patent Document 3: WO 2011/046944
Patent Document 4: US 2011/174713 A1
Patent Document 5: JP 2011-152538 A
Patent Document 6: WO 2011/046944 A1

### SUMMARY OF THE INVENTION

### PROBLEMS THAT THE INVENTION IS TO SOLVE

The split ring seal disclosed in Patent Document 3 is, however, an inelastic substance, and therefore requires for both the inner surface of a pressure vessel and the outer surface of the split ring seal to be given highly accurate surface finishing. Further, there is a concern that, if high-hardness foreign particles are present on the sealing surface, the split ring seal will be bruised by sliding a separation membrane element in the inner surface of the pressure vessel on the occasions of loading and pulling-out of the separation membrane element, and the split ring seal, though it allows a separation membrane element to be very easily loaded into and pulled out from a pressure vessel, has a risk of impairing its sealing property. In the event that leakage occurs due to sealing failure, there arises a problem that part of a fluid to be treated passes through the outside of a separation membrane element in the interior of a pressure vessel and reaches directly to a concentrated fluid side via a short path without passing through the separation membrane element, thereby resulting in degradation of substantial separation performance.

An object of the invention is therefore to provide a separation membrane module in which a plurality of spiral-type separation membrane elements are loaded in a cylindrical pressure-resistant vessel and which allows easy loading and removal of the separation membrane elements while maintaining sealing property even when high-hardness foreign particles are present on sealing surfaces and fully achieving its performance, thereby ensuring reductions in maintenance time and labor, and to provide a replacement method for such separation membrane elements.

### MEANS FOR SOLVING THE PROBLEMS

The present invention is defined in the appended claims. In order to solve the foregoing problems, the invention relates to the following embodiments (1) to (4).
(1) A separation membrane module in which a plurality of separation membrane elements are loaded in a cylindrical pressure vessel,
   in which each of the separation membrane elements is a spiral-type separation membrane element in which a periphery of a membrane unit-wound body formed by spirally winding a membrane unit including a separation membrane is covered by an outer jacket, an anti-telescoping plate is provided on at least one end of a combination of the membrane unit-wound body and the outer jacket, and a raw-water seal is provided around a periphery of at least the one anti-telescoping plate,
   and in which a separation membrane element (A) having a raw-water seal (a) which allows movement of the separation membrane element (A) in both directions in an interior of the cylindrical pressure vessel is loaded in an upstream end portion of the plurality of separation membrane elements and is positioned nearest to an end plate on the cylindrical pressure vessel at an upstream side in a raw-water feed direction and/or wherein the separation membrane element (A) having the raw-water seal (a) which allows movement of the separation membrane element (A) in both directions in an interior of the cylindrical pressure vessel is loaded in a downstream end portion of the plurality of separation membrane elements and is positioned nearest to an end plate on the cylindrical pressure vessel at a downstream side in a raw-water feed direction, and
   a separation membrane element (B) having a raw-water seal (b) which allows movement of the separation membrane element (B) in only one direction in the interior of the cylindrical pressure vessel without sustaining damage and coming to lose its sealing function, is loaded in all positions other than a position in which the separation membrane element (A) is loaded, in the plurality of separation membrane elements,
   wherein the raw-water seal (a) is a split-ring seal made of an inelastic material, and
   wherein the raw-water seal (b) is a U-cup or V-cup seal made of an elastic material.
(2) The separation membrane module according to (1), in which a plurality of the separation membrane elements (A) are loaded in series in the end portion on at least one side of the plurality of separation membrane elements.
(3) The separation membrane module according to (1) or (2), in which the separation membrane element (A) differs from the separation membrane element (B) in water permeability, removing performance, and/or pressure resistance.
(4) A method for replacing a separation membrane element in the separation membrane module according to any one of (1) to (3), the method including taking out the separation membrane element (A) loaded in the end portion on at least one side from an inside of the cylindrical pressure vessel without taking out the separation membrane element (B) from the inside of the cylindrical pressure vessel.

### ADVANTAGE OF THE INVENTION

According to the invention, in a separation membrane module in which a plurality of spiral-type separation membrane elements are loaded in a pressure-resistant vessel, it becomes possible to provide a method in which the loading and taking-out of the separation membrane elements are made easy and maintenance time and labor are reduced, while sealing property is maintained even when high-hardness foreign particles are present on sealing surfaces and performance of the separation membrane module is fully achieved.

### BRIEF DESCRIPTION OF THE DRAWINGS

[Fig. 1] Fig. 1 is a partially-cutaway perspective view showing an example of a spiral-type separation membrane element according to the invention.
[Fig. 2] Fig. 2 is a partially-enlarged sectional view showing a state that a separation membrane element equipped with an O-ring seal fitted to an anti-telescoping plate is loaded in the interior of a pressure vessel and being made by enlarging the vicinity of an O-ring seal fitted region and illustrating it schematically.
[Fig. 3] Fig. 3 is a partially-enlarged sectional view showing a state that a separation membrane element equipped with a U-cap seal fitted to an anti-telescoping plate is loaded in the interior of a pressure vessel and being made by enlarging the vicinity of a U-cap seal fitted region and illustrating it schematically.
[Fig. 4] Figs. 4 include a plan view (Fig. 4(a)) showing schematically an example of an inelastic seal which is in the shape of a split ring and is to be fitted to an anti-telescoping plate, and a view of a cross section formed by cutting the seal along the b-b line (Fig. 4(b)).
[Fig. 5] Fig. 5 is a cross-sectional view showing an example of a separation membrane module according to the present invention, in which a plurality of spiral-type separation membrane elements are loaded in a cylindrical pressure vessel.

### MODE FOR CARRYING OUT THE INVENTION

Modes for carrying out the invention are described below by reference to the drawings, but the invention should not be construed as being limited to embodiments shown in these drawings.

Fig. 1 is a partially-cutaway perspective view showing an example of a spiral-type separation membrane element to which the invention is applied. A representative example of a spiral-type separation membrane element is, as shown in Fig. 1, configured so that a separation membrane 1, a feed-side spacer 3 and a permeate-side spacer 2 are stacked together, they are spirally wound around a porous center pipe 4 as they are in a stacked state, and an anti-telescoping plate 5 is placed on both ends of the separation membrane-wound body. The end portion of the separation membrane is sealed to prevent mixing of a fed fluid and a permeated fluid.

The separation membrane 1 is a separation membrane in flat form, and a reverse osmosis membrane, an ultrafiltration membrane, a microfiltration membrane, a gas separation membrane, a degassing membrane or so on can be used. As the feed-side spacer 3, a material in net form, a material in mesh form, a sheet with grooves, a corrugated sheet or so on can be used. As the permeate-side spacer 2, a material in net form, a material in mesh form, a sheet with grooves, a corrugated sheet or so on can be used. In both cases of the feed-side spacer 3 and the permeate-side spacer 2, the net or the sheet may be independent of the separation membrane or it may be integral with the separation membrane by having undergone bonding, fusion or so on.

The anti-telescoping plate 5 is a plate substance which has openings and is installed in order to prevent the separation membrane-wound body from deforming cylindrically due to pressure of a passing fluid (telescoping phenomenon), and it preferably has an orbiting groove for loading a seal around the periphery thereof. The anti-telescoping plate 5 has no particular restriction as to the properties of its material so long as it has an anti-deformation function; however, depending on a use for it, there is a case where the anti-telescoping plate is required to have chemical resistance or heat resistance, and then its material can be chosen as appropriate to the specification required. In general, the material suitable for the anti-telescoping plate is a resin material, such as a thermoplastic resin, a thermosetting resin or a heat-resistant resin. In addition, for the purpose of maintaining the strength with a minimum hindrance to a flow of raw water, it is preferable that the anti-telescoping plate has a spoke-type structure including an external ring-shaped portion, an internal ring-shaped portion and a radial spoke portion.

The center pipe 4 has a plurality of pores in the periphery thereof. The material used for the center pipe 4 may be any material chosen from resins, metals or so on, but plastics such as NORYL resin and ABS resin are generally used in view of cost and durability.

As a method for sealing end portions of the separation membrane 1, an adhesion method is suitably used. An adhesive used therein may be any of known adhesives, such as urethane adhesives, epoxy adhesives and hot melt adhesive.

It is also preferable that the spiral-type separation membrane element is configured not to be expanded in diameter by binding the periphery of the separation membrane-wound body with an outer jacket. The outer jacket is a sheet made of polyester, polypropylene, polyethylene, polyvinyl chloride or the like, or thermosetting resin-coated glass fiber, and such a sheet or a fiber is wound around the peripheral surface of a separation membrane-wound body, thereby binding so as not to cause diameter expansion.

The present invention applies a spiral-type separation membrane element as shown in Fig. 1 to a separation membrane module which has a cross-sectional profile as shown in Fig. 5 and is configured to load a plurality of separation membrane elements in a cylindrical pressure vessel 26. In Fig. 5, each of 19a to 19f represents the separation membrane element as shown in Fig. 1. A fluid to be treated (raw water) is fed to an end portion of a first separation membrane element 19a from a port 18 for feeding the fluid to be treated. A concentrated fluid (concentrate) having treated by the first separation membrane is fed into a second separation membrane element 19b, further fed into and treated in 19c, 19d, 19e and 19f in order, and finally discharged out from a concentrated fluid discharge port 20. Each of center pipes in the separation membrane elements 19a to 19f is connected to a center pipe in the adjacent separation membrane element by means of a connector 21 and, at the same time, connected to permeated fluid (permeate) output ports 23a and 23b provided on end plates 22a and 22b. And permeated fluids (permeates) obtained in the separation membrane elements, respectively, are collected and taken to the outside of the separation system.

Additionally, although the port 18 for feeding the fluid to be treated and the port 20 for discharging the concentrated fluid are provided on end plates, respectively, in Fig. 5, they may be provided in neighborhoods of the end plates, respectively, on the cylindrical portion 24 of the pressure-resistant vessel (namely, the port 18 for feeding the fluid to be treated is provided between the end plate 22a and the first separation membrane element 19a, and the port 20 for discharging the concentrated fluid is provided between the end plate 22b and the final separation membrane element 19f).

The separation membrane elements 19a to 19f are provided with seals 25a1, 25a2 to 25f1, and 25f2, respectively, and each seal is fitted to an anti-telescoping plate 5 shown in Fig. 1, whereby the fluid to be treated and the concentrated fluid are isolated from each other in each separation membrane element. Additionally, although each of the separation membrane elements 19a to 19f is provided with seals at both sides thereof in Fig. 5, it is also possible to provide a seal on one side of each separation membrane element (namely to provide only seals 25a1 to 25fl or only seals 25a2 to 25f2). Providing seals on both sides allows enhancement of sealing performance, but it increases difficulty in loading and taking out the separation membrane element and tends to form a dead space between seals (e.g. between 25a1 and 25a2). Thus it is undesirable to provide seals on both sides when contamination of a concentrated liquid becomes a problem as is the case in concentration of juice.

The present invention can be achieved by using, in the separation membrane module in which a plurality of spiral-type separation membrane elements are loaded in a cylindrical pressure vessel 26 as illustrated in Fig. 5, two or more types of raw-water seals to be fitted on the periphery side of each anti-telescoping plate, and by designing so that a seal provided for at least one separation membrane element (A) (hereafter referred to as the separation membrane element A) include a raw-water seal (a) (hereafter referred to as the seal a) which allows movement of the separation membrane element A in both directions (without restriction on movement in both directions) in the interior of the cylindrical pressure vessel 26, and seals provided for separation membrane elements (B) (hereafter referred to as "the separation membrane elements B") other than the separation membrane element A include raw-water seals (b) (hereafter referred to as the seals b) which allow movement of the separation membrane elements B in one direction (namely, which inhibit movement in the other direction and have no restriction on movement in the one direction), and the separation membrane element A is loaded in the end portion on at least one side of the plurality of spiral-type separation membrane elements, more specifically on the most upstream side and/or the most downstream side in the raw-water feed direction, and the separation membrane elements B are loaded in all of the positions other than the position in which the separation membrane element A is loaded [Embodiment (1) mentioned hereinbefore].

For example, it becomes possible to carry out replacement operations with ease by using split ring seals as the seals 25a1 and 25a2 in Fig. 5, fitting U-cup ring seals as the other seals 25b1, 25b2, 25c1, 25c2, 25d1, 25d2, 25e1, 25e2, 25fl and 25f2 in Fig. 5 so as to open leftward as shown in Fig. 3 and, at the occasion of replacement of only the first separation membrane element 19a as mentioned above, by opening the end plate 22a on the feed side of a fluid to be treated and taken out only the first separation membrane element 19a, and then loading a new separation membrane element [Embodiment (6) mentioned hereinbefore]. In addition, even when a slight leak occurs due to poor sealing of split ring seals, which is a problem arising when all the seals are split ring seals, no leak of a fluid to be treated occurs in the second separation membrane element 19b and later because the U-cup ring seals are fitted so as to certainly open leftward in the second separation membrane element 19b and later. Thus it becomes possible to ensure compatibility between easy replacement of separation membrane elements and reduction in the risk of performance degradation due to seal-deficiency leakage.

Further, it also becomes possible to carry out replacement operations with ease by using split ring seals as the seals 25f1 and 25f2 in Fig. 5, fitting U-cup ring seals as the other seals 25a1, 25a2, 25b1, 25b2, 25c1, 25c2, 25d1, 25d2, 25e1 and 25e2 in Fig. 5 so as to open leftward as shown in Fig. 3 and, at the occasion of replacement of only the sixth separation membrane element 19f as mentioned above, by opening the end plate 22b on the discharge side of a concentrated fluid and taken out only the separation membrane element, and then loading a new separation membrane element.

In view of the main point of the present invention, another preferred embodiment therefore includes loading a plurality of separation membrane elements A in series in the end portion on at least one side of a plurality of separation membrane elements, namely on the most upstream side in the raw-water feed direction or on the most downstream side in the raw-water feed direction. [Embodiment (2) mentioned hereinbefore]. In the case of this embodiment, at the occasion of replacement of e.g. the second separation membrane element from the most upstream side in the raw-water feed direction, an operation for the replacement can be performed with ease by taking out only two separation membrane elements from the most upstream side in the raw-water feed direction, and then loading new separation membrane elements; however, at the occasion of replacing separation membrane elements on account of contamination thereof or scale deposition thereon, replacement of only one separation membrane element is often required, and it is therefore particularly preferable that only the separation membrane element located on the most upstream or the most downstream side is chosen as the separation membrane element A.

Examples of a seal usable in the present invention include, as mentioned above, an O-ring seal, an X-shaped ring seal, a U-cup ring seal and a split ring seal. For the case of the U-cup seal where its properties vary depending on the fitting direction, U-cap seals fitted in different directions are treated as different seals in the present invention. Further, cases where the same seals are used double e.g. in a configuration such that one seal is used at the position of 25a1 and the same seals are used in twos at the positions of 25b1 to 25f1, and a configuration such that a seal is fitted in the position of 25al, no seal is fitted in the position of 25a2 and seals are fitted in the remaining positions of 25b1 to 25fl and 25b2 to 25f2 are regarded as substantially different in seals for some of separation membrane elements. Split ring seals are, as illustrated in WO 2011/046944 (Patent Document 3), various in their materials and shapes and different in sealing property and slide friction, and their various characteristics allow appropriate choices of seals for the separation membrane element A and the other separation membrane elements. While the separation membrane element A is, in contrast to the separation membrane element B, required to be capable of being loaded and taken out through the movements in both directions in the interior of a pressure vessel, it will be desirable for the separation membrane element B to be highly sealed even if there is restrictions on movements in the interior of a pressure vessel. Specifically, it is required for the raw-water seal (a) to have the property of allowing "movements of a separation membrane element in both directions in the interior of a cylindrical pressure vessel". More specifically, the raw-water seal (a) is required to have substantially no difference in sliding resistance between cases of being moved in one direction and the other direction, for example, to be a seal which comes into parallel or bidirectional symmetric contact with a sliding surface. Examples of a shape applicable to the shape of a raw-water seal (a) having such characteristics include the shape of a split ring and the shape of an O-ring, and further the shape of a ring pointed on the seal contact side, such as a delta ring having a triangular profile, the shape of a ring having a convex profile instead of an O-shaped profile, and the shape of a corrupted sheet keeping asperities at the contact surface [Embodiment (3) mentioned hereinbefore]. The seal (a) is formed using an inelastic material and having a shape of a split ring. Examples of an organic material usable as the inelastic material include various rigid plastics, notably polytetrafluoroethylene, polyvinylidene fluoride, polyethylene and polypropylene, and those of an inorganic material usable as the inelastic material include not only metals such as iron, stainless steel, copper, aluminum, titanium and alloys thereof, but also ceramics, graphite and asbestos. Further, it is also possible to use organic-inorganic complexes such as FRP, and multilayer products of the materials as recited above.

In the case of an O-ring, a delta-ring or the like (not belonging to the present invention), using a seal made of an elastic material is preferable in view of high sealing quality, but it necessitates paying attention to susceptibility of the member to impairment of sliding property. From the viewpoint of attaching importance to sliding property, it is important to reduce crush allowance to be generally considered in using an elastic sealing material (the crush allowance is a rate of compressive deformation given to e.g. an O-ring made of an elastic material under using in order to increase the degree of close contact, and refers to a proportion of shrinkage caused in the outer diameter of an elastic seal by compressive deformation under using to the outer diameter of the elastic seal in an ordinary state). Specifically, the crush allowance which is generally adjusted to 8 to 30 % is reduced to 10% or below, preferably 5% or below, whereby it becomes possible to retain good sliding property in the interior of a pressure vessel.

There is no particular restriction on the elastic material, and frequently-used general elastic materials, such as nitrile rubber, styrol rubber, silicone rubber, fluoro-rubber, acryl rubber, ethylene-propylene rubber and urethane rubber, can be used.

Additionally, it is appropriate for those materials to be durable against an object fluid of a separation membrane module. In the case of choosing seawater as an object fluid, the use of iron alloys requires caution because they are easily corroded by seawater.

On the other hand, the raw-water seal (b) is, contrary to the raw-water seal (a), a seal that is markedly greater in sliding resistance in one direction than that in the opposite direction and cannot be moved in the direction of greater sliding resistance. The raw-water seal (b) having such a characteristic is asymmetrical in shape, and it is a seal that is made of an elastic material and has the shape of a U cup or a V cup which opens at the time when sliding from one direction (e.g. from the right direction as shown in Fig. 3) is tried, thereby being brought into close contact with a sliding surface [Embodiment (4) mentioned hereinbefore].

In addition to the case of replacing soiled separation membrane elements, the invention allows enhancement of performance balance throughout the inside of a separation membrane module by loading a plurality of separation membrane elements having different properties (water permeability, removing performance, pressure resistance and so on) into a pressure vessel [Embodiment (5) mentioned hereinbefore]. Further, the present invention is applied suitably e.g. to the case as suggested in WO 2005/082497 in which separation membrane elements different in water permeability are loaded into one pressure vessel and the case as suggested in JP-A-2001-137672 in which one of connectors for a plurality of separation membrane elements is changed into a plug which does not allow a fluid to pass through it and the permeate is taken out from two directions. This is because these cases require for separation membrane elements of the same kinds as previous ones to be loaded into the same positions as the previous ones, respectively, even when there occur neither soiling nor deposition of scales.

There are no particular restrictions on fluids (raw water) to which the present invention is applicable, and such fluids include various ones, such as river water, seawater, water obtained by sewage treatment, rainwater, industrial water and industrial effluent. The invention is, however, more suitable for treatment of fluids high in concentrations, notably seawater, which cause great fluctuations in working conditions and separating performance of separation membranes depending on changes in raw water concentration.

The invention has been described in detail and with reference to the specified embodiments.

### INDUSTRIAL APPLICABILITY

In a separation membrane module in which a plurality of spiral-type separation membrane elements are loaded in a cylindrical pressure vessel, the present invention can be suitably utilized as the separation membrane module and a method for replacing the separation membrane elements, and allows easy loading and taking-out of separation membrane elements and reductions in maintenance time and labor while fully achieving performance of the separation membrane module.

### DESCRIPTION OF REFERENCE NUMERALS AND SIGNS

- 1:: Separation membrane
- 2:: Permeate-side spacer
- 3:: Feed-side spacer
- 4:: Center pipe
- 5:: Anti-telescoping plate
- 6, 6a:: Fluid to be treated (Raw water)
- 7, 7a:: Permeated fluid (Permeate)
- 8:: Concentrated fluid (Concentrate)
- 9:: Inner wall of cylindrical pressure vessel
- 10:: Periphery of anti-telescoping plate
- 11:: Peripheral surface of anti-telescoping plate
- 12:: O-Ring seal
- 13:: U-Cup seal
- 14:: Split-ring seal made of inelastic material
- 15:: Split part of split-ring seal made of inelastic material
- 16:: Inner diameter of split-ring seal made of inelastic material
- 17:: Outer diameter of split-ring seal made of inelastic material
- 18:: Port for feeding fluid to be treated (raw water)
- 19a, 19b, 19c, 19d, 19e and 19f:: Separation membrane element
- 20:: Port for discharging concentrated fluid (Concentrate)
- 21:: Connector
- 22a and 22b:: End plate
- 23a and 23b:: Permeated fluid (Permeate) output port
- 24:: Cylindrical portion of pressure-resistant vessel
- 25a1, 25b1, 25c1, 25d1, 25e1 and 25f1:: Seal
- 25a2, 25b2, 25c2, 25d2, 25e2 and 25f2:: Seal
- 26:: Cylindrical pressure vessel

## Claims

1. A separation membrane module in which a plurality of separation membrane elements are loaded in a cylindrical pressure vessel (26),
wherein each of the separation membrane elements is a spiral-type separation membrane element in which a periphery of a membrane unit-wound body formed by spirally winding a membrane unit including a separation membrane (1) is covered by an outer jacket, an anti-telescoping plate (5) is provided on at least one end of a combination of the membrane unit-wound body and the outer jacket, and a raw-water seal is provided around a periphery of at least the one anti-telescoping plate (5),
and wherein a separation membrane element (A) having a raw-water seal (a) which allows movement of the separation membrane element (A) in both directions in an interior of the cylindrical pressure vessel (26) is loaded in an upstream end portion of the plurality of separation membrane elements and is positioned nearest to an end plate (22a) on the cylindrical pressure vessel (26) at an upstream side in a raw-water feed direction and/or wherein the separation membrane element (A) having the raw-water seal (a) which allows movement of the separation membrane element (A) in both directions in an interior of the cylindrical pressure vessel (26) is loaded in a downstream end portion of the plurality of separation membrane elements and is positioned nearest to an end plate (22b) on the cylindrical pressure vessel (26) at a downstream side in a raw-water feed direction, and
a separation membrane element (B) having a raw-water seal (b) which allows movement of the separation membrane element (B) in only one direction in the interior of the cylindrical pressure vessel without sustaining damage and coming to lose its sealing function, is loaded in all positions other than a position in which the separation membrane element (A) is loaded, in the plurality of separation membrane elements
wherein the raw-water seal (a) is a split-ring seal made of an inelastic material (14), and
wherein the raw-water seal (b) is a U-cup or V-cup seal made of an elastic material (13).

2. The separation membrane module according to claim 1, wherein a plurality of the separation membrane elements (A) are loaded in series in the end portion on at least one side of the plurality of separation membrane elements.

3. The separation membrane module according to claim 1 or 2, wherein the separation membrane element (A) differs from the separation membrane element (B) in water permeability, removing performance, and/or pressure resistance.

4. A method for replacing a separation membrane element in the separation membrane module according to any one of claims 1 to 3, the method comprising taking out the separation membrane element (A) loaded in the end portion on at least one side from an inside of the cylindrical pressure vessel (26) without taking out the separation membrane element (B) from the inside of the cylindrical pressure vessel (26).

## Patentansprüche

1. Trennmembranmodul, in dem eine Vielzahl von Trennmembranelementen in einem zylindrischen Druckbehälter (26) eingelegt sind,
wobei jedes der Trennmembranelemente ein Trennmembranelement eines Spiraltyps ist, bei dem ein Umfang eines Membraneinheit-Wickelkörpers, der durch spiralförmiges Wickeln einer Membraneinheit mit einer Trennmembran (1) gebildet ist, durch einen Außenmantel abgedeckt ist, eine Teleskopverhinderungsplatte (5) an zumindest einem Ende einer Verbindung des Membraneinheit-Wickelkörpers und des Außenmantels vorgesehen ist, und eine Rohwasserdichtung um einen Umfang der zumindest einen Teleskopverhinderungsplatte (5) herum vorgesehen ist,
und wobei ein Trennmembranelement (A) mit einer Rohwasserdichtung (a), die eine Bewegung des Trennmembranelements (A) in beide Richtungen im Innern des zylindrischen Druckbehälters (26) ermöglicht, in einen stromaufwärtsseitigen Endbereich der Vielzahl von Trennmembranelementen eingelegt ist und am nächsten an einer Endplatte (22a) am zylindrischen Druckbehälter (26) auf einer stromaufwärtsseitigen Seite in Rohwasserzuführrichtung positioniert ist, und/oder
wobei das Trennmembranelement (A) mit der Rohwasserdichtung (a), die eine Bewegung des Trennmembranelements (A) in beiden Richtungen im Innern des zylindrischen Druckbehälters (26) ermöglicht, in einen stromabwärtsseitigen Endbereich der Vielzahl von Trennmembranelementen eingelegt ist und am nächsten an einer Endplatte (22b) am zylindrischen Druckbehälter (26) auf einer stromabwärtsseitigen Seite in Rohwasserzuführrichtung positioniert ist, und
ein Trennmembranelement (B) mit einer Rohwasserdichtung (b), die eine Bewegung des Trennmembranelements (B) nur in eine Richtung im Inneren des zylindrischen Druckbehälters ohne Schaden zu nehmen und seine Dichtfunktion zu verlieren, ermöglicht, in allen Positionen mit Ausnahme einer Position, in der das Trennmembranelement (A) eingelegt ist, in der Vielzahl von Trennmembranelementen eingelegt ist,
wobei die Rohwasserdichtung (a) eine Spaltringdichtung aus unelastischem Material (14) ist, und
wobei die Rohwasserdichtung (b) eine U- oder V-Topfmanschette aus elastischem Material (13) ist.

2. Trennmembranmodul nach Anspruch 1, wobei eine Vielzahl der Trennmembranelemente (A) im Endbereich auf zumindest einer Seite der Vielzahl von Trennmembranelementen in Reihe angeordnet ist.

3. Trennmembranmodul nach Anspruch 1 oder 2, wobei das Trennmembranelement (A) sich vom Trennmembranelement (B) in der Wasserdurchlässigkeit, Trennleistung und/oder Druckbeständigkeit unterscheidet.

4. Verfahren zum Ersetzen eines Trennmembranelements im Trennmembranmodul nach einem der Ansprüche 1 bis 3, wobei das Verfahren das Herausnehmen des Trennmembranelements (A), das im Endbereich auf zumindest einer Seite eingelegt ist, aus einem Innern des zylindrischen Druckbehälters (26) ohne das Herausnehmen des Trennmembranelements (B) aus dem Innern des zylindrischen Druckbehälters (26) umfasst.

## Revendications

1. Module de membrane de séparation dans lequel une pluralité d'éléments de membrane de séparation sont chargés dans un réservoir sous pression cylindrique (26),
dans lequel chacun des éléments de membrane de séparation est un élément de membrane de séparation de type en spirale dans lequel une périphérie d'un corps enroulé d'unité de membrane formé par enroulement en spirale d'une unité de membrane comportant une membrane de séparation (1) est recouverte d'une enveloppe externe, une plaque anti-télescopique (5) est prévue sur au moins une extrémité d'une combinaison du corps enroulé d'unité de membrane et de l'enveloppe externe, et un joint d'étanchéité à l'eau brute est prévu autour de la périphérie d'au moins une plaque anti-télescopique (5),
et dans lequel un élément de membrane de séparation (A) ayant un joint d'étanchéité à l'eau brute (a) qui permet le mouvement de l'élément de membrane de séparation (A) dans les deux directions à l'intérieur du réservoir sous pression cylindrique (26) est chargé dans une partie d'extrémité amont de la pluralité d'éléments de membrane de séparation et est positionné le plus près d'une plaque d'extrémité (22a) sur le réservoir sous pression cylindrique (26) du côté amont dans une direction d'alimentation en eau brute et/ou
dans lequel l'élément de membrane de séparation (A) ayant le joint d'étanchéité à l'eau brute (a) qui permet le mouvement de l'élément de membrane de séparation (A) dans les deux directions à l'intérieur du réservoir sous pression cylindrique (26) est chargé dans une partie d'extrémité aval de la pluralité d'éléments de membrane de séparation et est positionné le plus près d'une plaque d'extrémité (22b) sur le réservoir sous pression cylindrique (26) du côté aval dans une direction d'alimentation en eau brute, et
un élément de membrane de séparation (B) ayant un joint d'étanchéité à l'eau brute (b) qui permet le mouvement de l'élément de membrane de séparation (B) dans une seule direction à l'intérieur du réservoir sous pression cylindrique sans subir de dommage et sans perdre sa fonction d'étanchéité, est chargé dans toutes les positions autres qu'une position dans laquelle l'élément de membrane de séparation (A) est chargé, dans la pluralité d'éléments de membrane de séparation
dans lequel le joint d'étanchéité à l'eau brute (a) est un joint à bague fractionnée réalisé en matériau inélastique (14), et
dans lequel le joint d'étanchéité à l'eau brute (b) est un joint en forme de U ou de V réalisé en un matériau élastique (13).

2. Module de membrane de séparation selon la revendication 1, dans lequel une pluralité des éléments de membrane de séparation (A) sont chargés en série dans la partie d'extrémité sur au moins un côté de la pluralité d'éléments de membrane de séparation.

3. Module de membrane de séparation selon la revendication 1 ou 2, dans lequel l'élément de membrane de séparation (A) diffère de l'élément de membrane de séparation (B) par la perméabilité à l'eau, la performance d'élimination et/ou la résistance à la pression.

4. Procédé de remplacement d'un élément de membrane de séparation dans le module de membrane de séparation selon l'une quelconque des revendications 1 à 3, le procédé comprenant le fait de retirer l'élément de membrane de séparation (A) chargé dans la partie d'extrémité sur au moins un côté de l'intérieur du réservoir sous pression cylindrique (26) sans retirer l'élément de membrane de séparation (B) de l'intérieur du réservoir sous pression cylindrique (26).
